# EUROPEAN PATENT SPECIFICATION

(11) **EP 3 608 129 B1**
(45) Date of publication and mention of the grant of the patent: **24.03.2021**
(21) Application number: 19189907.9
(22) Date of filing: 02.08.2019
(51) Int. Cl.: B60C 25/05, B60C 25/138, G01M 17/013, G01B 5/20, G01M 17/02

(54) **METHOD FOR REMOVING TIRES OF WHEELS OF VEHICLES**
METHODE, UM REIFEN VON FAHRZEUGRÄDERN ZU DEMONTIEREN
PROCEDE DE DEMONTAGE DES PNEUS DE ROUE DE VEHICULE

(30) Priority: 10.08.2018 IT 201800008044
(43) Date of publication of application: 12.02.2020
(73) Proprietor: Devel S.r.l., 41042 Fiorano Modenese (MO) (IT)
(72) Inventor: BONETTI, Valentino, 41042 Fiorano Modenese (MO) (IT)
(74) Representative: Luppi, Emanuele

(56) References cited:
- EP-A1- 1 927 484
- EP-A1- 2 110 270
- EP-A1- 3 293 020

## Description

The present invention relates to a method for removing tires of wheels of vehicles.

As is known, in order to remove the tire of a vehicle wheel from its rim, first of all the upper bead (also called the "first bead") of the tire must be removed from the edge of the rim on which it is fitted (an operation also called "bead breaking").

Subsequently, the first bead is secured and removed from the rim edge (bead attachment). The tire is finally removed from the rim by pushing it to the side opposite the first removed bead.

In order to completely remove the tire from the wheel rim, bead breaking of the lower bead (also called the "second bead") of the same tire must also be performed.

To facilitate these operations, the use is known of various types of machines, so-called "tire changers", adapted to both allow the removal of the tire from the rim and permit the subsequent phase of fitting the tire on the same rim.

A particular type of tire changer is shown in the patent document WO 2014/174331 A1 and comprises a base frame, which supports a rotary gripping unit for gripping the rim, which in turn makes it possible to set the wheel in rotation around a work axis.

The rotary gripping unit is sliding on the base frame along a horizontal sliding direction and is fitted in a tilting way around a tilting axis parallel to the sliding direction; this way the work axis, initially vertical, can be tilted (preferably by an angle between 10° and 20°) to facilitate the tire removal/fitting phases.

The base frame is also fitted with a tool-holder turret provided with a number of work tools movable in vertical direction.

To remove the tire from the rim, the tire bead is initially broken using a special work tool (so-called "bead breaker"), which is inserted by force between the tire and the rim.

Then, another work tool, shaped like a hook, is inserted between the bead and the rim edge to secure the bead edge and move it away from the rim, so as to remove the bead.

After these operations, a visual inspection of the rim is sometimes carried out by the operator in order to exclude the presence of any shape defects, e.g., an ovalization or a deformed portion due to a violent impact.

If no defects are found, then another tire is fitted on the same rim.

This method of removing vehicle wheel tires is subject to further improvement. In this regard, it should be noticed that the bead breaking operation does not, in itself, permit identifying any rim shape defects, so the possibility exists of these defects going unnoticed and of a defective rim, after bead breaking, pointlessly being fitted with another tire, which in any case cannot be used on a vehicle with that rim.

This risk is only partially avoided by the rim control phase, which is generally carried out visually by an operator after bead breaking; this is an accessory operation, which takes time and is in any case susceptible to human error.

In this regard, the fact is underlined that the shape of the inner surface of the rim, i.e. that part of the rim which is not visible from the outside before bead breaking inasmuch as covered by the tire, is not known *a priori* to the operator because it varies depending on the model of wheel, further complicating the visual identification of defects.

Methods for removing tires of wheels of vehicles of the known type are also disclosed in patent documents EP 3 293 020, EP 1 927 484 and EP 2 110 270. The main aim of the present invention is to devise a method for removing tires of wheels of vehicles that automatically allows identifying the presence of any rim shape defects.

Within this aim, one of the objects of the present invention is to devise a method for removing tires of wheels of vehicles which eliminates the need for visual inspection by an operator and therefore reduces the time needed to perform all the vehicle wheel tire removal and fitting operations.

A further object of the present invention is to reduce the risk of fitting a tire on a defective rim.

Yet another object of the present invention is to devise a method for removing tires of wheels of vehicles that allows overcoming the mentioned drawbacks of tires of wheels of vehicles having the characteristics of claim 1.

Other characteristics and advantages of the present invention will be more evident from the description of a preferred, but not exclusive, embodiment of a method for removing tires of wheels of vehicles, illustrated as an indicative, but not limiting example in the attached tables of drawings in which:
Figure 1 is an axonometric view of a first embodiment of a tire changer which can be used to implement the method according to the invention;

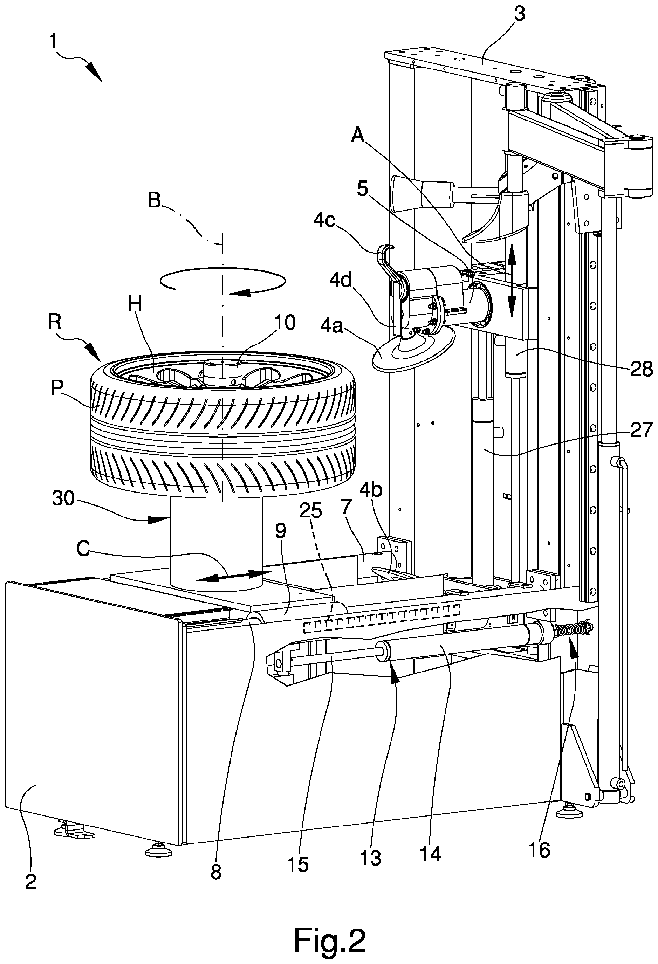

Figure 2 is an axonometric view, from another angle, of the machine of Figure 1;
Figures 3 and 4 are sectional views of the machine of Figure 1 in two different positions;
Figure 5 is an axonometric view of a second embodiment of a tire changer which can be used to implement the method according to the invention;
Figure 6 is an axonometric view, from another angle, of the machine of Figure 5;
Figure 7 is a view of a detected shape of the rim with respect to a reference shape;
Figure 8 is a view of the machine of Figure 1 and of a display screen indicating defects on the wheel rim;
Figure 9 is a view of the machine of Figure 1 and of a display screen indicating that the rim does not have defects.

With particular reference to such figures, reference numeral 1 globally indicates a tire changer usable to implement the present method for removing tires of wheels of vehicles.

The method according to the invention comprises at least the following steps:
- supplying a machine 1 for the assembly and removal of tires P of wheels R of vehicles comprising:
   - at least one bead breaking tool 4a, 4b movable for bead breaking a tire P from a rim H of a wheel R of vehicles; and
   - at least one rotary gripping unit 30 adapted to support the wheel R and set it in rotation around a work axis B;
   wherein the bead breaking tool 4a, 4b and the rotary gripping unit 30 are mutually movable along a sliding direction C substantially transverse to the work axis B;
- bead breaking the wheel R by inserting the bead breaking tool 4a, 4b between a bead T', T" of the tire P and a flange F', F" of the rim H and by setting in rotation the wheel R by means of the rotary gripping unit 30, during the setting in rotation the bead breaking tool 4a, 4b remaining in contact with an internal bearing surface S', S" of the rim H;
- during bead breaking, detecting the mutual movement of the bead breaking tool 4a, 4b and of the rotary gripping unit 30 along the sliding direction C to obtain a detected shape 100 of the internal bearing surface S', S";
- comparing the detected shape 100 with a reference shape 101 of the internal bearing surface S', S" to identify mismatches 102 between the detected shape 100 and the reference shape 101;
- reporting the mismatches 102.

The machine 1 can be used, in particular, to remove the tire P from the rim H of a wheel R of vehicles and to fit it back on again (or to fit a replacement tire). The tire P has two opposite beads T', T" intended to come into contact with two flanges F', F" of the rim H.

Between the flanges F', F" of the rim H the inner surface of the rim H (so-called channel E) is defined, which remains hidden and is not visible from the outside when the tire P is fitted on the rim H.

The machine 1 comprises at least one base frame 2 for resting on the ground. On the base frame 2 is fitted at least one tool-holder turret 3 which is provided with at least one work tool 4a, 4b, 4c, 4d for fitting and/or removing the tire P onto and/or from the rim H.

The machine 1 comprises a plurality of work tools 4a, 4b, 4c, 4d which, in particular, are divided up as follows:
- a first bead breaking tool 4a and a second bead breaking tool 4b, which are used to break the bead of the tire P by inserting themselves between the beads T', T" and the corresponding flanges F', F", going into contact with the internal bearing surfaces S', S";
- a hook tool 4c, which is used to extract from the channel E one of the beads T', T" of the tire P with bead already broken;
- a fitting tool 4d, which is used to fit the tire P onto the rim H.

More in detail, the tool-holder turret 3 comprises at least one arm 5, 6 which holds the work tools 4a, 4b, 4c, 4d and which is mobile along a substantially vertical lifting/lowering direction A.

In the embodiment shown in the illustrations, there are two arms 5, 6, a first arm 5, which holds the first bead breaking tool 4a, the hook tool 4c and the fitting tool 4d, and a second arm 6, which holds the second bead breaking tool 4b.

The first bead breaking tool 4a, the hook tool 4c and the fitting tool 4d are fitted on the first arm 5 in a reciprocally rotatable way so they can be used alternately on the wheel R.

The first arm 5 is associated with a first hydraulic jack 27, which actuates its sliding along the lifting/lowering direction A.

Similarly, the second arm 6 is associated with a second hydraulic jack 28, which actuates its sliding along the lifting/lowering direction A.

The machine 1 also comprises the rotary gripping unit 30, which supports the wheel R and sets it in rotation around the work axis B.

The rotary gripping unit 30 is fitted on the base frame 2 in a sliding way along the horizontal sliding direction C, in approach and away movement with respect to the tool-holder turret 3.

In particular, the base frame 2 comprises two or more guide members 7, 8 (in particular a first guide member 7 and a second guide member 8) which extend along the sliding direction C and the rotary gripping unit 30 comprises as many sliding sleeves 9 as are fitted sliding around the guide members 7, 8. Furthermore, the rotary gripping unit 30 comprises a motorized spindle 10 for setting the wheel R in rotation around the work axis B and a tilting assembly 11 for tilting the motorized spindle 10 around a tilting axis D parallel to the sliding direction C.

This way the work axis B, normally arranged vertically, can be tilted (preferably by an angle between 10° and 20°) to facilitate the removal phases of the tire P.

The tilting assembly 11 is associated with the sliding sleeves 9 and the motorized spindle 10 is associated with the tilting assembly 11.

To bring the rotary gripping unit 30 closer to and move it further away from the tool-holder turret 3, the machine 1 comprises at least one actuator assembly 12, 13 which actuates the sliding of the rotary gripping unit 30 along the sliding direction C.

The actuator assembly 12, 13, e.g., comprises at least one hydraulic cylinder having a liner 14 and a stem 15 which can be removed from the liner 14.

Preferably, there are two hydraulic cylinders 12, 13, a first hydraulic cylinder 12, located in the proximity and parallel to the first guide member 7, and a second hydraulic cylinder 13, located in the proximity and parallel to the second guide member 8.

The hydraulic cylinders 12, 13 are supplied with an operating fluid (usually pressurized oil) through a supply system 31, 32 comprising a pumping assembly 31 and a hydraulic distribution circuit 32.

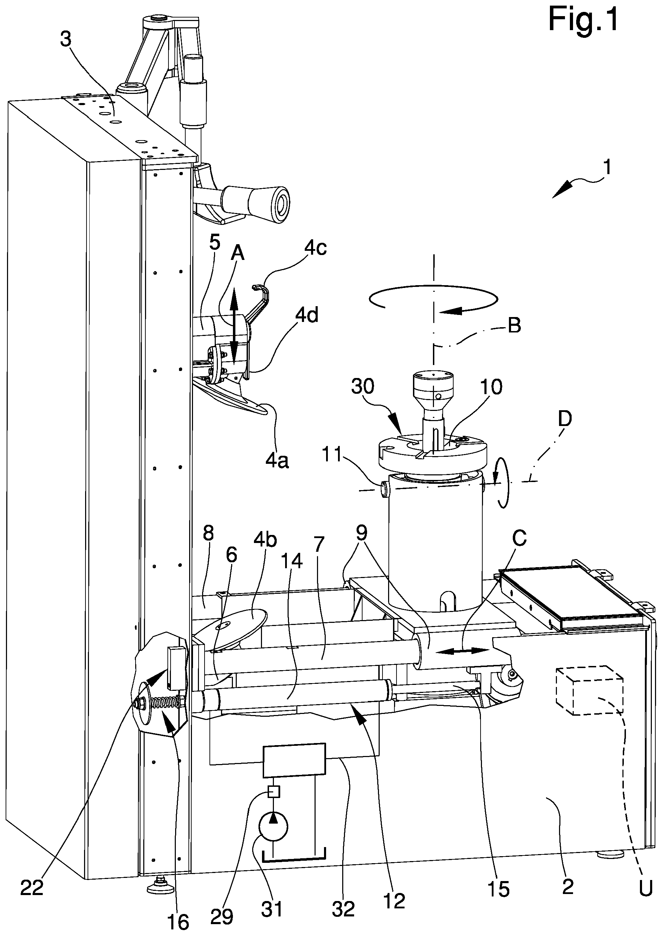

The supply system 31, 32 is shown in a schematic and simplified way in Figure 1; for the expert in the field it is easy to understand that the supply system 31, 32 actually fitted on the machine 1 is more articulated and complex than the one shown and that, advantageously, it can also be used to supply the hydraulic jacks 27, 28 and any other hydraulic device fitted on the machine 1.

The machine 1 also comprises elastic safety means 16 placed between the actuator assembly 12, 13 and at least one of the base frame 2 and the rotary gripping unit 30, the elastic safety means 16 being compressible by the actuator assembly 12, 13 in case of contact between the rim H and one of the work tools 4a, 4b, 4c, 4d.

The elastic safety means 16 comprise:
- at least one guide pin 17 associated with the actuator assembly 12, 13; and
- at least one helical spring 18 arranged around the guide pin 17 and having a first extremity 18a arranged abutted on a first abutment surface 19 locked together with the guide pin 17 and a second extremity 18b arranged abutted on a second abutment surface 20 locked together with at least one of the base frame 2 and the rotary gripping unit 30.

The second abutment surface 20 comprises at least one through hole 21 crossed from side to side by the guide pin 17.

In the embodiment shown in the Figures from 1 to 4, the elastic safety means 16 are placed between the liner 14 and the base frame 2.

In particular, in this embodiment, the elastic safety means 16 comprise two guide pins 17, associated with the liner 14 of the two hydraulic cylinders 12, 13, and two helical springs 18, arranged around the two guide pins 17.

The first abutment surfaces 19 are defined at the free extremities of the two guide pins 17, while the second abutment surfaces 20 are defined by two corresponding portions of the base frame 2, on which two through holes 21 are obtained, crossed from side to side by the two guide pins 17.

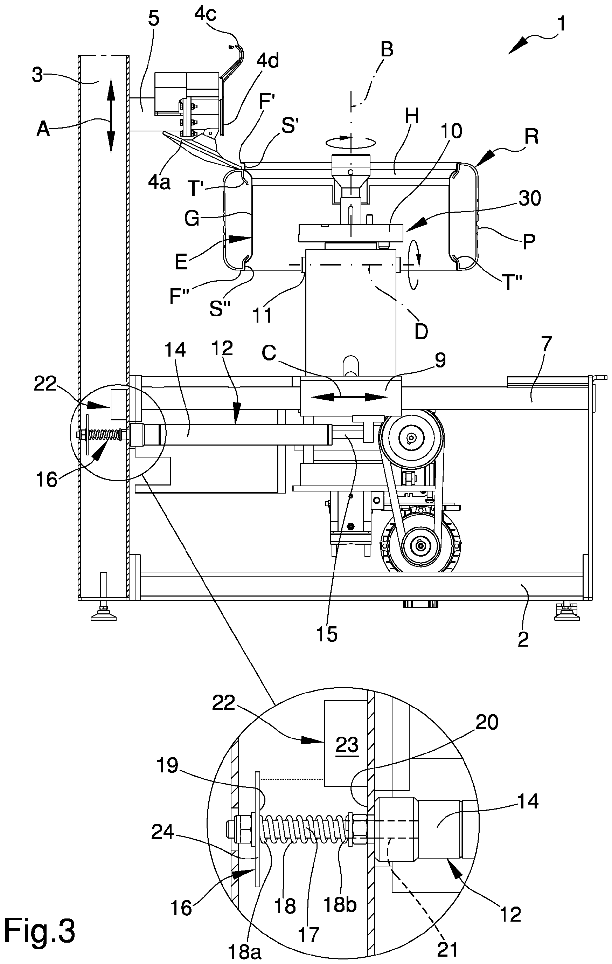

In practice, on one side of the portions of the base frame 2 (where the through holes 21 have been obtained) the liners 14 of the hydraulic cylinders 12, 13 normally rest, while on the other side the second extremities 18b of the helical springs 18 (Figure 3) are abutted.

When the rotary gripping unit 30 is at a distance from the tool-holder turret 3, the actuator assembly 12, 13 can be activated to determine the return of the stems 15 inside the liners 14 and thus bring the rotary gripping unit 30 closer to the tool-holder turret 3 and to the work tools 4a, 4b, 4c, 4d.

In the event of the work tools 4a, 4b, 4c, 4d coming into undesired contact with the wheel R, as in the case in which, e.g., the first bead breaking tool 4a ends up against the bottom of the channel E during the bead breaking phase, any possible impact will not cause any damage to the work tools 4a, 4b, 4c, 4d or to the rim H because, by virtue of the elastic safety means 16, the hydraulic cylinders 12, 13 have an extra shortening stroke and the additional force produced by the actuator assembly 12, 13 is discharged on the helical springs 18.

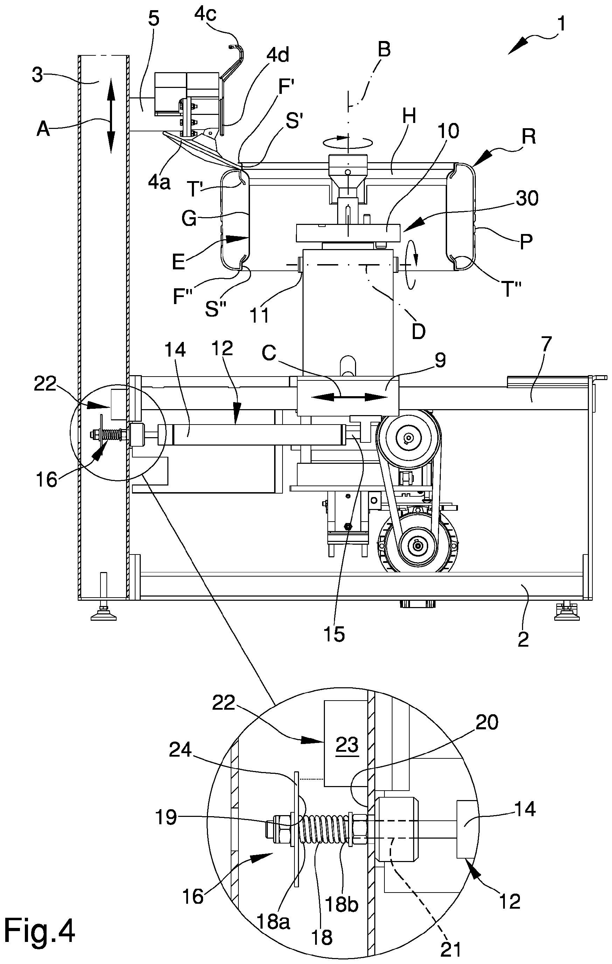

When one of the work tools 4a, 4b, 4c, 4d comes into contact with the rim H, in fact, the following occurs:
- the rotary gripping unit 30, being prevented from further approaching the tool-holder turret 3 by the presence of the work tool 4a, 4b, 4c, 4d, stops its forward movement along the sliding direction C;
- the hydraulic cylinders 12, 13 continue to shorten but, since the stems 15 cannot be moved because, like the rotary gripping unit 30, they are blocked by contact with the work tool 4a, 4b, 4c, 4d, they do so by moving the liners 14 away from the base frame 2 and loading the helical springs 18 (Figure 4).

It is easy to understand, therefore, that the operator can control the operation of the actuator assembly 12, 13 in a simpler and more tranquil way since, even in the event of contact between the rim H and the work tools 4a, 4b, 4c, 4d, the additional force produced by the actuator assembly 12, 13 is discharged on the helical springs 18 and does not cause any damage to the wheel R or to the machine 1.

To facilitate the operation of the machine 1, sensor means 22 are usefully provided, adapted to detect the amount of compression of the elastic safety means 16 by the actuator assembly 12, 13.

The sensor means 22 comprise at least one device selected from the list comprising: led matrix sensors, laser sensors, force sensors.

In the particular embodiment shown in the figures from 1 to 4, e.g., the sensor means 22 comprise at least one detection sensor 23 which detects the distance between the first abutment surface 19 and the second abutment surface 20; the smaller the distance between the surfaces 19, 20 the greater the amount of compression of the elastic safety means 16.

The detection sensor 23 is an optical sensor fitted on the second abutment surface 20 which detects the distance of a plate 24 fitted on the first abutment surface 19.

Usefully, the detection sensor 23 is only fitted at the first hydraulic cylinder 12, while the second hydraulic cylinder 13 is without it.

Alternative embodiments cannot however be ruled out wherein the sensor means 22 comprise a device of a different type from that described and shown in the illustrations, such as, e.g., a force sensor / load cell.

In fact, since the amount of compression of the helical springs 18 is proportional to the force applied to them, it follows that by means of a force sensor, e.g., placed between the first extremity 18a and the guide pin 17, or between the second extremity 18b and the base frame 2, or at another suitable point, it is easily possible to determine the amount of compression.

The machine 1 comprises at least one processing and control unit U electronically associated with the actuator assembly 12, 13 and with the sensor means 22 and adapted to inhibit the controls of the actuator assembly 12, 13 which determines the compression of the elastic safety means 16 beyond a threshold value.

This way, the operator can control the machine 1 in an even safer way, because when the threshold value is reached the actuator assembly 12, 13 is automatically deactivated, thus preventing e.g. the helical springs from being packed up.

In combination with or as an alternative to what has been said above, the machine 1 comprises:
- at least one detection assembly 25, e.g., of the type of an encoder or the like, which detects the position of the rotary gripping unit 30 along the sliding direction C; and
- at least one processing and control unit U electronically associated with the actuator assembly 12, 13, with the detection assembly 25 and with the sensor means 22, wherein the processing and control unit U is adapted to acquire an internal profile G of the rim H by means of the contact of one of the work tools 4a, 4b, 4c, 4d with a plurality of points of the internal profile G arranged at different heights, for each of such points the detection being made of the position of the rotary gripping unit 30 along the sliding direction C when the compression of the elastic safety means 16 reaches a preset value.

In this regard, the fact is underlined that, in the context of the present treatise, "internal profile" G means the shape of the channel E obtained by sectioning the rim H with a median section plane lying on the axis of the wheel R.

In other words, the machine 1 provided with a processing and control unit U, with a detection assembly 25 and with sensor means 22 such as those described above is able to move (e.g., by means of step-by-step forward movements) the work tools 4a, 4b, 4c, 4d autonomously, along the lifting/lowering direction A and the rotary gripping unit 30 along the sliding direction C, so that one of the work tools 4a, 4b, 4c, 4d (which acts as a feeler device) transits along the internal profile G, and to acquire each time the position of the rotary gripping unit 30 at different heights (i.e. at different heights with respect to the ground).

Besides this, the machine 1 is able to move the rotary gripping unit 30 to detect the conformation of the internal bearing surfaces S', S", which are circular in shape, save any defects, so as to implement the method according to the invention, as will be described in more detail in the remainder of the present description.

The detection of the position of the rotary gripping unit 30 occurs when the elastic safety means 16 reach an amount of compression equal to the preset value, so as to ensure that the measurement is always carried out with the work tool 4a, 4b, 4c, 4d in contact with the rim H.

From the measurements made, the machine 1 is able to self-learn information such as the nominal diameter of the internal bearing surfaces S', S", the shape of the internal bearing surfaces S', S" and the shape of the channel E, and then to exploit this information in the subsequent operations of fitting and removing the tire onto and from the rim H.

It is specified that, in the present treatise, the expression "nominal diameter" refers to the diameter of the internal bearing surfaces S', S", i.e. the surfaces of the channel E arranged in the proximity of the flanges F', F" and on which the beads T', T" are intended to rest when the tire P is fitted on the rim H.

Such nominal diameter should correspond, save any defects on the rim H, to that which is generally indicated by a special wording printed on the rim H itself.

In the particular embodiment shown in the illustrations, the self-learning procedure is carried out using the bead breaking tools 4a, 4b as feeler devices, so as to carry it out in conjunction with the initial bead breaking operations. Alternatively, or in combination with the sensor means 22, the machine 1 may provide for at least one pressure detection device 29 associated with at least one of:
- the hydraulic cylinders 12, 13;
- the hydraulic jacks 27, 28;
- the supply system 31, 32.

In practice, the pressure detection device 29 detects whether the pressure of the operating fluid supplied by the supply system 31, 32 exceeds a certain limit value and enables the machine 1 to automatically understand whether:
- during the activation of the hydraulic cylinders 12, 13 and the approach of the wheel R to the tool-holding turret 3, the rim H comes into contact with the work tools 4a, 4b, 4c, 4d;
- during the activation of the hydraulic jacks 27, 28 and the movement of the arms 5, 6 along the lifting/lowering direction A, the work tools 4a, 4b, 4c, 4d come into contact with the rim H and/or with the tire P.

In fact, when the work tools 4a, 4b, 4c, 4d and the wheel R come into contact, the pressure of the operating fluid naturally tends to increase.

As mentioned above, in the embodiment shown in the figures from 1 to 4, the elastic safety means 16 are placed between the liner 14 of the hydraulic cylinders 12, 13 and the base frame 2.

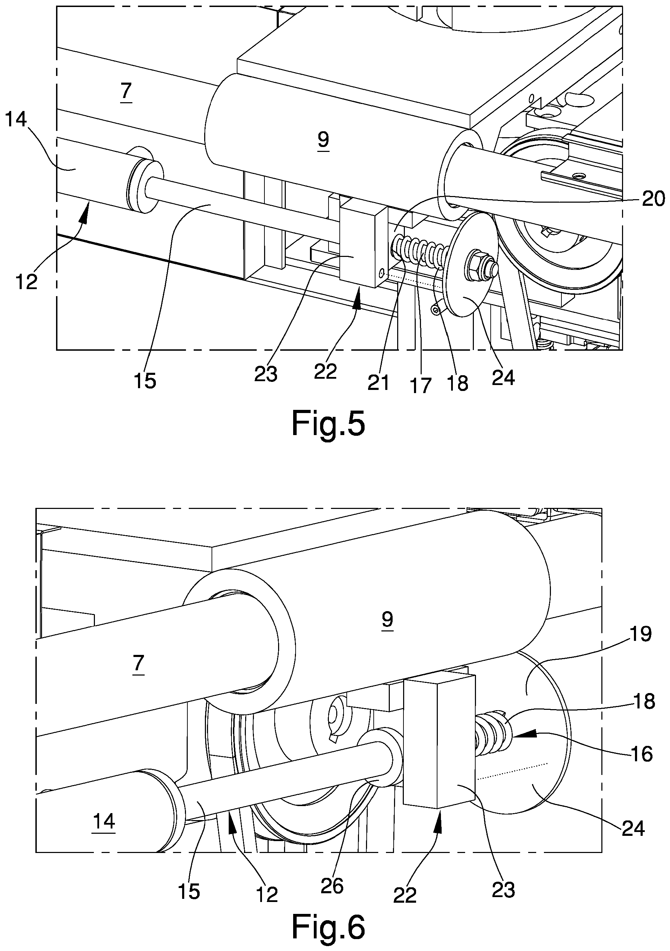

However, alternative embodiments cannot be ruled out such as that shown in Figures 5 and 6 wherein, instead, the elastic safety means 16 are placed between the stem 15 of the hydraulic cylinders 12, 13 and the rotary gripping unit 30.

In this embodiment too, the elastic safety means 16 comprise two guide pins 17 and two helical springs 18 (redistributed equally on the two hydraulic cylinders 12, 13), but with the difference that the guide pins 17 are associated with the two stems 15 of the hydraulic cylinders 12, 13 and not with the liners 14.

The first abutment surfaces 19 are defined at the free extremities of the two guide pins 17 while the second abutment surfaces 20 are defined by two corresponding portions of the rotary gripping unit 30 (one for each hydraulic cylinder 12, 13), on which are obtained the two through holes 21 crossed from side to side by the two guide pins 17.

In practice, on one side of the portions of the rotary gripping unit 30 (where the through holes 21 have been obtained) a shoulder 26 normally rests, obtained on each stem 15, while on the opposite side the second extremities 18b of the helical springs 18 are abutted.

It is easy to appreciate how the operation of the embodiment shown in the Figures 5 and 6 is totally identical to that of the embodiment shown in the Figures from 1 to 4 considering that, in this case too, part of the force produced by the hydraulic cylinders 12, 13 ends up discharging on the helical springs 18 when the work tools 4a, 4b, 4c, 4d come into contact with the wheel R.

Furthermore, it should be noticed that, as in the Figures from 1 to 4, the embodiment of the Figures 5 and 6 also provides for the presence of sensor means 22 adapted to detect the compression of the elastic safety means 16 by the actuator assembly 12, 13.

In this case too, the detection sensor 23 is an optical sensor which is fitted on the second abutment surface 20 and which detects the distance of a plate 24 fitted on the first abutment surface 19, operating in a way completely identical to the sensor means 22 described above with reference to the embodiment of the Figures from 1 to 4.

As previously indicated, the method to which the present patent relates preferably makes use of the machine 1 described above, which has significant advantages for correctly and effectively performing the steps of the method according to the invention, but which, nevertheless, is only a specific and non-exhaustive example of a machine that can be used for this purpose. Consequently, the possibility of using an even completely different machine 1 cannot be ruled out, as long as it is able to perform the steps of the method to which the present patent relates.

Advantageously, the bead breaking step comprises a step of approaching the bead breaking tool 4a, 4b to the respective internal bearing surface S', S" by means of:
- movements of the rotary gripping unit 30 along the sliding direction C;
- movements of the bead breaking tool 4a, 4b along a lifting/lowering direction A substantially parallel to the work axis B.

By means of these movements, the first bead breaking tool 4a is inserted between the first bead T' and the first flange F' and made to come into contact with the first internal bearing surface S'.

The rotary gripping unit 30 is then set in rotation around the work axis B, completely separating the first bead T' from the first flange F'.

The same operations must be repeated with the second bead breaking tool 4b, which must be inserted, in the same way, between the second bead T" and the second flange F" in contact with the second internal bearing surface S", before again setting the rotary gripping unit 30 back in rotation and thus completely bead breaking the wheel R.

According to the invention, one step of the method also provides for the detection of the mutual movement between the bead breaking tool 4a, 4b being used and the rotary gripping unit 30 along the sliding direction C, while the step of bead breaking the wheel R is performed.

Conveniently, this step comprises a step of monitoring the position of the rotary gripping unit 30 with respect to the bead breaking tool 4a, 4b used by measuring movements of the rotary gripping unit 30 along the sliding direction C.

In the specific embodiment presented here, in fact, the bead breaking tools 4a, 4b used cannot move along the sliding direction C, therefore the movement to be detected is only that of the rotary gripping unit 30, something which is done by means of the detection assembly 25.

It cannot however be ruled out that the method according to the invention be implemented by tire changers wherein the rotary gripping unit 30 does not move along the sliding direction C and, instead, the bead breaking tools 4a, 4b move along the sliding direction C; in this case, the need exists to detect the movement of the bead breaking tools 4a, 4b along the sliding direction C instead of the rotary gripping unit 30.

It is essential, in this step, that the bead breaking tools 4a, 4b used remain in contact with the corresponding internal bearing surfaces S', S"; if the rim H were perfect, during the rotation of the rotary gripping unit 30 it would have no shift movement along the sliding direction C, because the internal bearing surfaces S', S" would be perfectly circular.

In the presence of imperfections on the internal bearing surfaces S', S", on the other hand, deviations from perfect circularity require the rotary gripping unit 30 to shift slightly forwards and backwards along the sliding direction C to keep the bead breaking tool 4a, 4b used in contact with the corresponding internal bearing surface S', S".

In any case, the processing and control unit U detects any movements of the rotary gripping unit 30 and uses them to digitally construct the detected shape 100 of the investigated internal bearing surface S', S".

Subsequently, according to the invention, the step is envisaged of comparing the detected shape 100 with the reference shape 101, which is a perfect circumference of diameter equal to the nominal diameter shown on the rim H. To make this comparison possible, the operator must provide the processing and control unit U with the information relating to the nominal diameter of the rim H as shown on the rim H itself, e.g. by entering this data via keyboard, touch screen or other man-machine interface.

Advantageously, the comparison step comprises a step of calculating any deviations between the detected shape 100 and the reference shape 101 and verifying whether these deviations are greater than a prefixed tolerance 103, the mismatches 102 being identified when the deviations are greater than the tolerance 103 itself.

In other words, the detected shape 100 is a circumference save imperfections on the internal bearing surface S', S" being investigated.

The imperfections constitute deviations between the detected shape 100 and the reference shape 101, which are however allowed as long as their value remains below the tolerance 103.

The imperfections are here defined as mismatches 102 only if they exceed the tolerance 103 value, in which case the rim H must be recognized as defective and discarded as such.

Conveniently, furthermore, the step of comparing the detected shape 100 and the reference shape 101 comprises a step of assigning an angular position 104 to the mismatches 102 with respect to a reference angular position 105.

This step is performed by the processing and control unit U, which stores the angular position 104 of the mismatches 102 which it detects, obviously only if these are actually present.

The recognition of the angular position 104 of any mismatches 102 is possible thanks, e.g., to an angular encoder or other instruments (not shown in detail in the illustrations) adapted to know the instantaneous position of the rotary gripping unit 30 while it rotates around the work axis B.

Advantageously, the step of reporting the mismatches 102 comprises a step of showing at least one graphic alarm symbol 106 on a display screen 107. Furthermore, the step of reporting also comprises a step of indicating the angular position 104 on the display screen 107.

In the particular example of embodiment shown in the illustrations, the display screen 107 shows the comparison between the detected shape 100 and the reference shape 101, which are shown superimposed to better highlight the deviations.

The reporting of the mismatches 102, of course, is only performed if these are actually present, in which case the display screen 107 notifies the operator of the problem.

If there are any mismatches 102, therefore, the clear indication of their angular position 104 accompanies the graphic alarm symbol 106 on the display screen 107, so as to make it quicker for the operator to identify them in case of need. The possibility cannot however be ruled out of the display screen 107 indicating only the presence of mismatches 102 without showing the detected shape 100 and the reference shape 101.

The choice of the reference angular position 105 is not trivial and corresponds to a predefined position of the wheel R fitted on the rotary gripping unit 30.

For example, the reference angular position 105 may correspond to the position of a vertical plane passing through the work axis B and perpendicular to the sliding direction C; this way, when the rotary gripping unit 30 is stopped at the end of bead breaking operations and the angular position 104 is shown on the display screen 107 as the distance with respect to the reference angular position 105, then the operator can locate the exact position of the defect by simply looking at the above vertical plane and from there moving his/her gaze by an angle equal to the angular position 104.

Alternatively, the reference angular position 105 can correspond to the position of a vertical plane passing through the work axis B and parallel to the sliding direction C, in this case too enabling the operator to easily find the real position of the defect using the same method described above.

It is clear that numerous ways exist of reporting the angular position 104, all of which are equivalent, not least, e.g., the possibility of dividing the wheel R like the dial of a clock, wherein "12 o'clock" corresponds to the angular position of the wheel R facing the tool-holder turret 3, "6 o'clock" corresponds to the angular position of the wheel R opposite the tool-holder turret 3, while "3 o'clock" and "9 o'clock" are defined by the intersection of the wheel R with a vertical plane lying on the work axis B and orthogonal to the sliding direction C; in this case the angular position 104 which appears on the display screen 107 could simply consist in the indication of a "time" which the operator must ideally project on the wheel R.

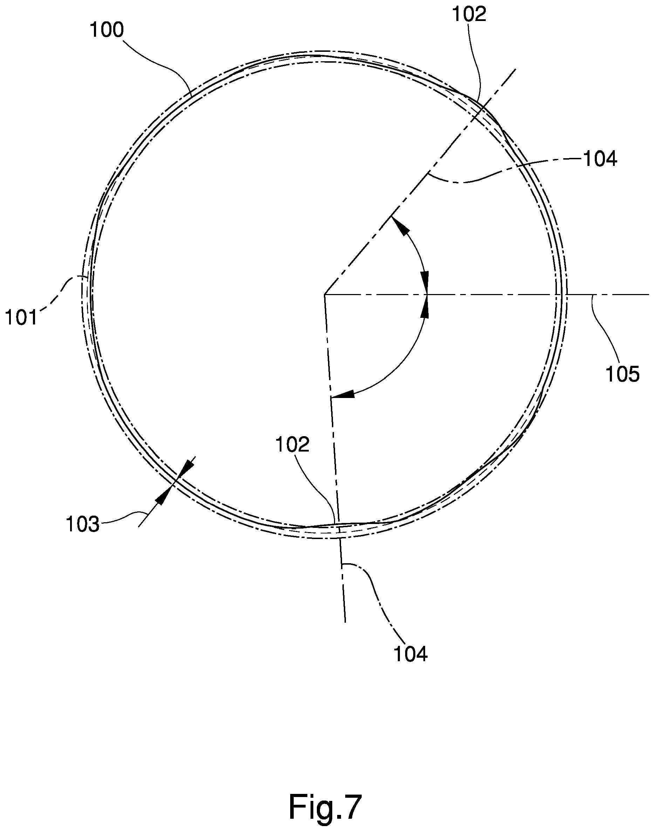

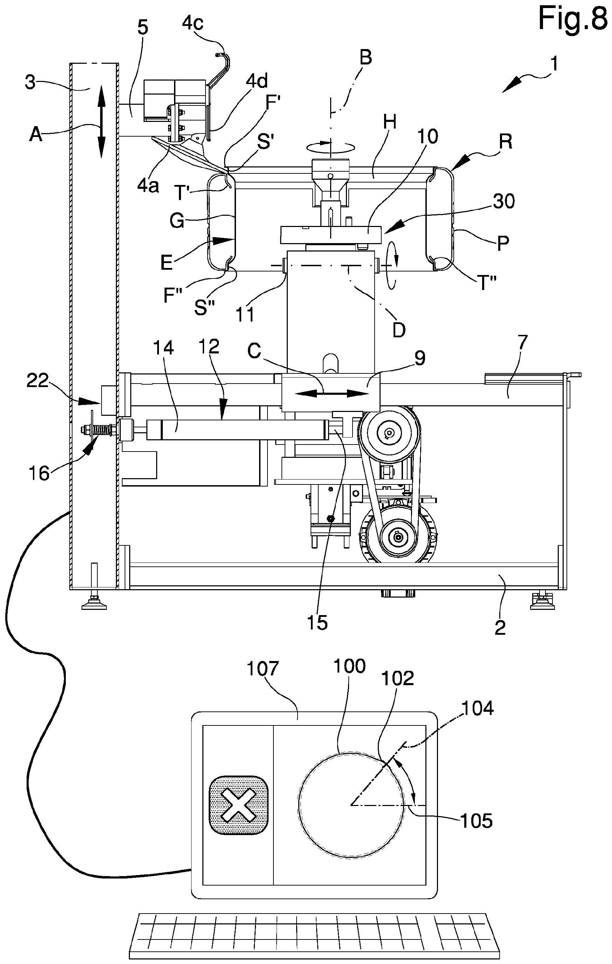

Those just described are just a few possible examples and in Figure 8 the rim H is shown on the display screen 107 according to one of the various possibilities. In Figures 7 and 8, the reference angular position 105 has been arbitrarily chosen as a half-line coming out of the center of the reference shape 101 and directed horizontally to the right, but the possibility of choosing a different reference angular position 105 cannot be ruled out, comprising according to the position taken by the operator with respect to the wheel R.

Appropriately, the method comprises a step of showing at least one approval graphic symbol 108 on the display screen 107 in case no mismatches 102 are found.

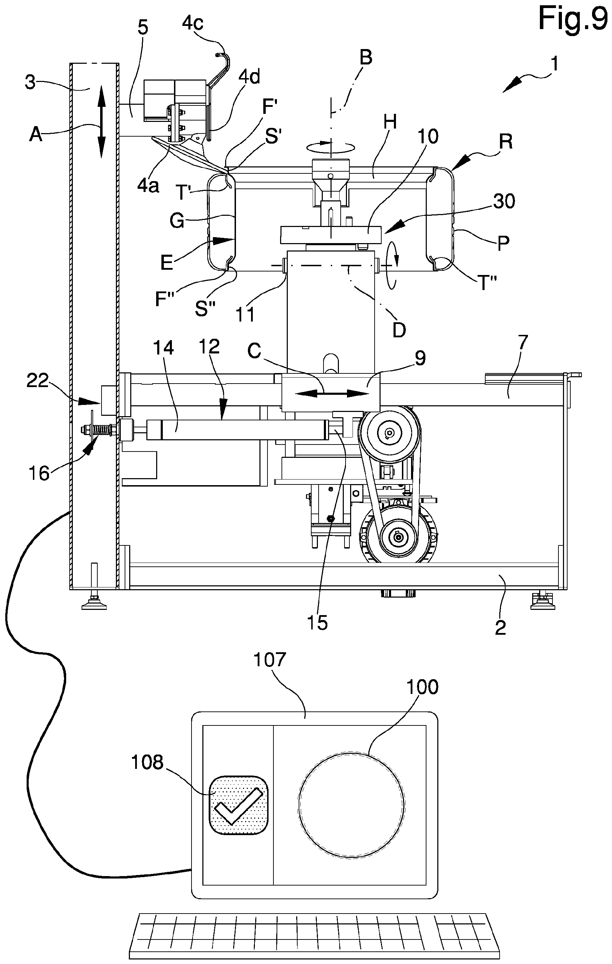

In this case, schematically shown in Figure 9, on the display screen 107 the comparison appears between the detected shape 100 and the reference shape 101, but obviously without indicating any angular position 104.

It cannot however be ruled out that on the display screen 107 only the approval graphic symbol 108 is shown.

Advantageously, the method comprises repeating the aforementioned steps to remove two beads T', T" of the wheel R, i.e. the first bead T' and the second bead T", and to report the mismatches 102 of two internal bearing surfaces S', S" of the wheel R, i.e. the first internal bearing surface S' and the second internal bearing surface S".

More in detail, the machine 1 comprises two bead breaking tools 4a, 4b, of which the first bead breaking tool 4a and the second bead breaking tool 4b, and the step of repeating comprises employing the first bead breaking tool 4a to remove the first bead T' and report mismatches 102 of the first internal bearing surface S' and employing the second bead breaking tool 4b to remove the second bead T" and report mismatches 102 of the second internal bearing surface S".

It is sufficient for just one of the two internal bearing surfaces S', S" of a rim H to show mismatches 102 to qualify the rim H in question as defective and determine the need to discard it.

It has in practice been ascertained that the described invention achieves the intended objects.

In this regard, the fact is underlined that this method for removing tires of wheels of vehicles makes it possible to automatically identify the presence of any defects in the shape of the rim.

Furthermore, this method eliminates the need for visual inspection by an operator and thus reduces the time required to perform all vehicle wheel tire removal and fitting operations.

Finally, the present invention reduces the risk of fitting a tire on a defective rim, since the detection of defects is no longer entrusted to a human operator but takes place in a fully automatic way.

## Claims

1. Method for removing tires (P) of wheels (R) of vehicles comprising at least the following steps:
- supplying a machine (1) for the assembly and removal of tires (P) of wheels (R) of vehicles comprising:
- at least one bead breaking tool (4a, 4b) movable for bead breaking a tire (P) from a rim (H) of a wheel (R) of vehicles; and
- at least one rotary gripping unit (30) adapted to support said wheel (R) and set it in rotation around a work axis (B);
wherein said bead breaking tool (4a, 4b) and said rotary gripping unit (30) are mutually movable along a sliding direction (C) substantially transverse to said work axis (B);
- bead breaking said wheel (R) by inserting said bead breaking tool (4a, 4b) between a bead (T', T") of said tire (P) and a flange (F', F") of said rim (H) and by setting in rotation said wheel (R) by means of said rotary gripping unit (30), during the setting in rotation said bead breaking tool (4a, 4b) remaining in contact with an internal bearing surface (S', S") of said rim (H);
- during said bead breaking, detecting the mutual movement of said bead breaking tool (4a, 4b) and of said rotary gripping unit (30) along said sliding direction (C) to obtain a detected shape (100) of said internal bearing surface (S', S");
- comparing said detected shape (100) with a reference shape (101) of said internal bearing surface (S', S") to identify mismatches (102) between said detected shape (100) and said reference shape (101);
**characterized by** the fact that:
- said method comprises the step of reporting said mismatches (102);
- said comparing comprises a step of assigning at least one angular position (104) to at least one of said mismatches (102) with respect to a reference angular position (105).

2. Method according to claim 1, **characterized by** the fact that said bead breaking comprises a step of approaching said bead breaking tool (4a, 4b) to said internal bearing surface (S', S") by means of at least one of:
- movements of said rotary gripping unit (30) along said sliding direction (C);
- movements of said bead breaking tool (4a, 4b) along a lifting/lowering direction (A) substantially parallel to said work axis (B).

3. Method according to one or more of the preceding claims, **characterized by** the fact that said detecting comprises a step of monitoring the position of said rotary gripping unit (30) with respect to said bead breaking tool (4a, 4b) by measuring movements of said rotary gripping unit (30) along said sliding direction (C).

4. Method according to one or more of the preceding claims, **characterized by** the fact that said comparing comprises a step of calculating any deviations between said detected shape (100) and said reference shape (101) and verifying whether said deviations are greater than a prefixed tolerance (103), said mismatches (102) being identified when said deviations are greater than said tolerance (103).

5. Method according to one or more of the preceding claims, **characterized by** the fact that said reporting comprises a step of showing at least one graphic alarm symbol (106) on at least one display screen (107).

6. Method according to one or more of the preceding claims, **characterized by** the fact that said reporting comprises a step of indicating said angular position (104) on said display screen (107).

7. Method according to one or more of the preceding claims from 1 to 4, **characterized by** the fact that it comprises a step of showing at least one approval graphic symbol (108) on said display screen (107) in the event of such mismatches (102) not being identified.

8. Method according to one or more of the preceding claims, **characterized by** the fact that it comprises repeating said steps to remove two beads (T', T") of said wheel (R), of which a first bead (T') and a second bead (T"), and to report mismatches (102) of two internal bearing surfaces (S', S") of said wheel (R), of which a first internal bearing surface (S') and a second internal bearing surface (S").

9. Method according to one or more of the preceding claims, **characterized by** the fact that said machine (1) comprises two bead breaking tools (4a, 4b), of which a first bead breaking tool (4a) and a second bead breaking tool (4b), said repeating comprising employing said first bead breaking tool (4a) to remove said first bead (T') and report mismatches (102) of said first internal bearing surface (S') and employing said second bead breaking tool (4b) to remove said second bead (T") and report mismatches (102) of said second internal bearing surface (S").

## Patentansprüche

1. Verfahren zum Entfernen von Reifen (P) von Rädern (R) von Fahrzeugen, das mindestens die folgenden Schritte umfasst:
- Bereitstellung einer Maschine (1) für die Montage und Demontage von Reifen (P) von Rädern (R) von Fahrzeugen, umfassend:
- mindestens ein Abdrückwerkzeug (4a, 4b), das zum Abdrücken eines Reifens (P) von einer Felge (H) eines Rades (R) von Fahrzeugen beweglich ist; und
- mindestens eine drehbare Greifeinheit (30), die geeignet ist, das Rad (R) zu tragen und es in Drehung um eine Arbeitsachse (B) zu versetzen;
wobei das Abdrückwerkzeug (4a, 4b) und die drehbare Greifeinheit (30) entlang einer Gleitrichtung (C), die im Wesentlichen quer zur Arbeitsachse (B) verläuft, gegenseitig beweglich sind;
- Abdrücken des Rades (R) durch Einführen des Abdrückwerkzeugs (4a, 4b) zwischen einen Wulst (T', T") des Reifens (P) und ein Felgenhorn (F', F") der Felge (H) und durch In-Drehung-Setzen des Rades (R) mittels der drehbaren Greifeinheit (30), wobei während des In-Drehung-Setzens das Abdrückwerkzeug (4a, 4b) in Kontakt mit einer inneren Lagerfläche (S', S") der Felge (H) bleibt;
- während des Abdrückens, Erfassen der gegenseitigen Bewegung des Abdrückwerkzeugs (4a, 4b) und der drehbaren Greifeinheit (30) entlang der Gleitrichtung (C), um eine erfasste Form (100) der inneren Lagerfläche (S', S") zu erhalten;
- Vergleichen der erfassten Form (100) mit einer Referenzform (101) der inneren Lagerfläche (S', S"), um Unstimmigkeiten (102) zwischen der erfassten Form (100) und der Referenzform (101) zu identifizieren;
**dadurch gekennzeichnet, dass**:
- das Verfahren den Schritt der Meldung der Unstimmigkeiten (102) umfasst;
- das Vergleichen einen Schritt des Zuordnens mindestens einer Winkelposition (104) zu mindestens einer der Unstimmigkeiten (102) in Bezug auf eine Referenzwinkelposition (105) umfasst.

2. Verfahren nach Anspruch 1, **dadurch gekennzeichnet, dass** das Abdrücken einen Schritt des Annäherns des Abdrückwerkzeugs (4a, 4b) an die innere Lagerfläche (S', S") mittels mindestens einer der folgenden Maßnahmen umfasst:
- Bewegungen der drehbaren Greifeinheit (30) entlang der Gleitrichtung (C);
- Bewegungen des Abdrückwerkzeugs (4a, 4b) entlang einer Hebe-/Senkrichtung (A), die im Wesentlichen parallel zu der Arbeitsachse (B) verläuft.

3. Verfahren nach einem oder mehreren der vorhergehenden Ansprüche, **dadurch gekennzeichnet, dass** das Erfassen einen Schritt des Überwachens der Position der drehbaren Greifeinheit (30) in Bezug auf das Abdrückwerkzeug (4a, 4b) durch Messen von Bewegungen der drehbaren Greifeinheit (30) entlang der Gleitrichtung (C) umfasst.

4. Verfahren nach einem oder mehreren der vorhergehenden Ansprüche, **dadurch gekennzeichnet, dass** der Vergleich einen Schritt des Berechnens aller Abweichungen zwischen der erfassten Form (100) und der Referenzform (101) umfasst, und des Überprüfens, ob die Abweichungen größer als eine vorgegebene Toleranz (103) sind, wobei die Unstimmigkeiten (102) identifiziert werden, wenn die Abweichungen größer als die Toleranz (103) sind.

5. Verfahren nach einem oder mehreren der vorhergehenden Ansprüche, **dadurch gekennzeichnet, dass** die Meldung einen Schritt der Anzeige mindestens eines grafischen Alarmsymbols (106) auf mindestens einem Anzeigebildschirm (107) umfasst.

6. Verfahren nach einem oder mehreren der vorhergehenden Ansprüche, **dadurch gekennzeichnet, dass** das Melden einen Schritt des Angebens der Winkelposition (104) auf dem Anzeigebildschirm (107) umfasst.

7. Verfahren nach einem oder mehreren der vorhergehenden Ansprüche 1 bis 4, **dadurch gekennzeichnet, dass** es einen Schritt umfasst, bei dem mindestens ein grafisches Freigabesymbol (108) auf dem Anzeigebildschirm (107) angezeigt wird, falls solche Unstimmigkeiten (102) nicht identifiziert werden.

8. Verfahren nach einem oder mehreren der vorhergehenden Ansprüche, **dadurch gekennzeichnet, dass** es das Wiederholen der Schritte umfasst, um zwei Wülste (T', T") des Rades (R) zu entfernen, von denen ein erster Wulst (T') und ein zweiter Wulst (T") ist, und um Unstimmigkeiten (102) von zwei inneren Lagerflächen (S', S") des Rades (R) zu melden, von denen eine erste innere Lagerfläche (S') und eine zweite innere Lagerfläche (S") ist.

9. Verfahren nach einem oder mehreren der vorhergehenden Ansprüche, **dadurch gekennzeichnet, dass** die Maschine (1) zwei Abdrückwerkzeuge (4a, 4b) umfasst, von denen das erste Abdrückwerkzeug (4a) und ein zweites Abdrückwerkzeug (4b) ist, wobei das Wiederholen umfasst, dass das erste Abdrückwerkzeug (4a) eingesetzt wird, um den ersten Wulst (T') zu entfernen und Unstimmigkeiten (102) der ersten inneren Lagerfläche (S') zu melden, und das zweite Abdrückwerkzeug (4b) eingesetzt wird, um den zweiten Wulst (T") zu entfernen und Unstimmigkeiten (102) der zweiten inneren Lagerfläche (S") zu melden.

## Revendications

1. Procédé de démontage de pneus (P) de roues (R) de véhicules comprenant au moins les étapes suivantes :
- la fourniture d'une machine (1) pour le montage et le démontage de pneus (P) de roues (R) de véhicules comprenant :
- au moins un outil de décollement de talon (4a, 4b) mobile pour décoller le talon d'un pneu (P) à partir d'une jante (H) d'une roue (R) de véhicules ; et
- au moins une unité de préhension rotative (30) adaptée pour porter ladite roue (R) et la mettre en rotation autour d'un axe de travail (B) ;
dans lequel ledit outil de décollage de talon (4a, 4b) et ladite unité de préhension rotative (30) sont mutuellement mobiles le long d'une direction de coulissement (C) sensiblement transversale audit axe de travail (B) ;
- le décollement de talon de ladite roue (R) par l'insertion dudit outil de décollement de talon (4a, 4b) entre un talon (T', T") dudit pneu (P) et un rebord (F', F") de ladite jante (H) et par la mise en rotation de ladite roue (R) au moyen de ladite unité de préhension rotative (30), pendant la mise en rotation, ledit outil de décollement de talon (4a, 4b) restant en contact avec une surface d'appui interne (S', S") de ladite jante (H) ;
- pendant ledit décollement de talon, la détection du mouvement mutuel dudit outil de décollement de talon (4a, 4b) et de ladite unité de préhension rotative (30) le long de ladite direction de coulissement (C) pour obtenir une forme détectée (100) de ladite surface d'appui interne (S', S") ;
- la comparaison de ladite forme détectée (100) avec une forme de référence (101) de ladite surface d'appui interne (S', S") pour identifier des discordances (102) entre ladite forme détectée (100) et ladite forme de référence (101) ;
**caractérisé par le fait que** :
- ledit procédé comprend l'étape de signalement desdites discordances (102) ;
- ladite comparaison comprend une étape d'attribution d'au moins une position angulaire (104) à au moins une desdites discordances (102) par rapport à une position angulaire de référence (105).

2. Procédé selon la revendication 1, **caractérisé par le fait que** ledit décollement de talon comprend une étape de rapprochement dudit outil de décollement de talon (4a, 4b) vers ladite surface d'appui interne (S', S") au moyen d'au moins un parmi :
- des mouvements de ladite unité de préhension rotative (30) le long de ladite direction de coulissement (C) ;
- des mouvements dudit outil de décollement de talon (4a, 4b) le long d'une direction de soulèvement/abaissement (A) sensiblement parallèle audit axe de travail (B).

3. Procédé selon l'une ou plusieurs des revendications précédentes, **caractérisé par le fait que** ladite détection comprend une étape de surveillance de la position de ladite unité de préhension rotative (30) par rapport audit outil de décollement de talon (4a, 4b) par la mesure de mouvements de ladite unité de préhension rotative (30) le long de ladite direction de coulissement (C).

4. Procédé selon l'une ou plusieurs des revendications précédentes, **caractérisé par le fait que** ladite comparaison comprend une étape de calcul de quelconques écarts entre ladite forme détectée (100) et ladite forme de référence (101) et de vérification de si lesdits écarts sont supérieurs à une tolérance préfixée (103), lesdites discordances (102) étant identifiées lorsque lesdits écarts sont supérieurs à ladite tolérance (103).

5. Procédé selon l'une ou plusieurs des revendications précédentes, **caractérisé par le fait que** ledit signalement comprend une étape de présentation d'au moins un symbole graphique d'alarme (106) sur au moins un écran d'affichage (107).

6. Procédé selon l'une ou plusieurs des revendications précédentes, **caractérisé par le fait que** ledit signalement comprend une étape d'indication de ladite position angulaire (104) sur ledit écran d'affichage (107).

7. Procédé selon l'une ou plusieurs des revendications 1 à 4 précédentes, **caractérisé par le fait qu'**il comprend une étape de présentation d'au moins un symbole graphique d'approbation (108) sur ledit écran d'affichage (107) dans le cas où de telles discordances (102) ne sont pas identifiées.

8. Procédé selon l'une ou plusieurs des revendications précédentes, **caractérisé par le fait qu'**il comprend la répétition desdites étapes pour démonter deux talons (T', T") de ladite roue (R), dont un premier talon (T') et un second talon (T"), et pour signaler des discordances (102) de deux surfaces d'appui internes (S', S") de ladite roue (R), dont une première surface d'appui interne (S') et une seconde surface d'appui interne (S").

9. Procédé selon l'une ou plusieurs des revendications précédentes, **caractérisé par le fait que** ladite machine (1) comprend deux outils de décollement de talon (4a, 4b), dont un premier outil de décollement de talon (4a) et un second outil de décollement de talon (4b), ladite répétition comprenant l'utilisation dudit premier outil de décollement de talon (4a) pour démonter ledit premier talon (T') et signaler des discordances (102) de ladite première surface d'appui interne (S') et l'utilisation dudit second outil de décollement de talon (4b) pour démonter ledit second talon (T") et signaler des discordances (102) de ladite seconde surface d'appui interne (S").
